Europäisches Patentamt

European Patent Office

Office européen des brevets

(11) Veröffentlichungsnummer: **0 449 397 A2**

# (12) EUROPÄISCHE PATENTANMELDUNG

(21) Anmeldenummer: 91250068.3

(22) Anmeldetag: 12.03.91

(51) Int. Cl.5: **H02J 7/14**

(30) Priorität: 24.03.90 DE 4009504

(43) Veröffentlichungstag der Anmeldung:
02.10.91 Patentblatt 91/40

(84) Benannte Vertragsstaaten:
**CH DE FR GB IT LI SE**

(71) Anmelder: **MANNESMANN Aktiengesellschaft**
**Mannesmannufer 2**
**W-4000 Düsseldorf 1(DE)**

(72) Erfinder: **Kemner, Axel, Dipl.Ing.**
**Dahlienweg 8**
**W-3004 Isernhagen(DE)**

Erfinder: **Meyer, Hans-Friedrich, Dipl.-Ing.**
**Birkenweg 7**
**W-3007 Gehrden(DE)**
Erfinder: **Keschwari, Mahmud, Dipl.-Ing.**
**Ellernstrasse 2**
**W-3013 Barsinghausen(DE)**
Erfinder: **Schweer, Karl-Heinz, Dipl.-Ing.**
**Grosse Bergstrasse 25A**
**W-3007 Gehrden(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

(54) Einrichtung zur elektrischen Versorgung eines Verbrauchers eines Anhängerfahrzeuges.

(57) Einrichtung zur elektrischen Versorgung eines Verbrauchers eines Anhängerfahrzeugs.

Bei Anhängerfahrzeugen besteht das Problem, daß die Versorgung von am Anhängerfahrzeug vorhandenen elektrischen Verbrauchern diese elektrischen Verbraucher mit der elektrischen Energie einer im oder am Zugfahrzeug angeordneten Einrichtung zur Versorgung mit elektrischer Energie gespeist werden müssen. Besonders nachteilig wirkt sich dieses bei Anhängerfahrzeugen eines Eisenbahnzuges aus. Die Energiequelle am Zugfahrzeug - Lokomotive - muß sehr stark sein. Bei Defekten in den einzelnen Anhängerfahrzeugen werden die Verbraucher der betroffenen Anhängerfahrzeuge funktionsunfähig.

Es wird deshalb vorgeschlagen, im oder am Anhängerfahrzeug (1) einen Generator (15) zum Erzeugen von elektrischer Energie anzuordnen.

Fig.1

Die Erfindung betrifft eine Einrichtung zur elektrischen Versorgung eines Verbrauchers eines Anhängerfahrzeugs

Bei einem von einem Motor getriebenen Zugfahrzeug gezogenen Anhängerfahrzeug, welches einen elektrischen Verbraucher, wie z.B. ein Antiblockierregelsystem für die Bremsanlage des Anhängerfahrzeugs aufweist, ist es üblich, den elektrischen Verbraucher des Anhängerfahrzeugs mit der elektrischen Energie einer im oder am Zugfahrzeug angeordneten Einrichtung zur Versorgung mit elektrischer Energie zu speisen.

Dies erfordert eine relativ starke Energiequelle am Zugfahrzeug. Der Verbraucher am Anhängerfahrzeug kann nur dann betrieben werden, wenn das Anhängerfahrzeug an das Zugfahrzeug elektrisch angekoppelt ist.

Besonders nachteilig ist die Abhängigkeit elektrischer Verbraucher von der Energiequelle des Zugfahrzeugs bei Anhängerfahrzeugen eines Eisenbahnzuges, da zum einen die Energiequelle am Zugfahrzeug (Lokomotive) sehr stark sein muß und zum anderen bei Defekten in den elektrischen Verbindungsleitungen zwischen den einzelnen Anhängerfahrzeugen die Verbraucher der betroffenen Anhängerfahrzeuge funhtionsunfähig werden.

Es ist zwar denkbar, jedes einzelne Anhängerfahrzeug mit einem Akkumulator auszurüsten, der den oder die Verbraucher des Anhängerfahrzeugs mit elektrischer Energie versorgt.

Eine solche Lösung hat jedoch den Nachteil, daß sich der Akkumulator während längerer Standzeiten des Anhängerfahrzeugs entlädt und daraus resultierend bei erneuter Inbetriebnahme des Anhängerfahrzeugs die für den oder die Verbraucher des Anhängerfahrzeugs erforderliche elektrische Energie nicht zur Verfügung steht.

Der Erfindung liegt die Aufgabe zugrunde, eine Einrichtung zur Versorgung eines elektrischen Verbrauchers eines Anhängerfahrzeugs mit elektrischer Energie zu schaffen, welche sicherstellt, daß ständig elektrische Energie für den Verbraucher des Anhängerfahrzeugs zur Verfügung steht.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, daß jedes Anhängerfahrzeug von einer externen elektrischen Energieversorgung und von Aufladestationen unabhängig ist.

Zum Antreiben des elektrische Energie erzeugenden Generators kann in vorteilhafter Weise Druckluft aus einem bereits am Anhängerfahrzeug vorhandenen Druckluftvorratsbehälter, der beispielsweise auch die Bremsanlage des Anhängerfahrzeugs mit Druckluft versorgt, genommen werden.

Der Druchluftbedarf für diesen Zweck ist nicht sehr hoch, da der Generator nur so lange angetrieben werden muß, bis der mit dem Generator über eine Steuerschaltung verbundene Akkumulator einen vorbestimmten Ladungszustand erreicht hat.

Da der Generator, der Akkumulator und der Verbraucher mittels der Steuerschaltung elektrisch miteinander verknüpft sind, wird der Verbraucher bei anfänglich entladenem oder einen zu geringen Ladungszustand aufweisendem Akkumulator direkt vom Generator mit elektrischer Energie versorgt und der Akkumulator mit der überschüssigen elektrischen Energie des Generators gleichzeitig aufgeladen.

In vorteilhafter Weise kann der Generator auch mittels einer biegsamen Welle angetrieben werden, die einerseits mit der Antriebswelle des Generators und andererseits mit einer drehfest mit einem Rad des Anhängerfahrzeugs verbundenen Achse oder mit einem Fahrzeugrad oder mit einem an der Achse bzw. an dem Fahrzeugrad angeordneten Teil in Wirkverbindung steht.

Der Generator, der Akkumulator und die elektrische Steuerschaltung sind vorteilhafter Weise in einem einzigen Gehäuse untergebracht.

Diese Teile können zusammen oder auch für sich alleine an jeder beliebigen Stelle des Anhängerfahrzeugs angeordnet sein, da die zum Antrieb des Generators vorgesehene biegsame Welle oder die die Druckluft zum Anströmen eines mit dem Generator verbundenen Teiles führende Druckmittelleitung zum einen beliebig lang sein und zum anderen um jedes Hindernis herumgeführt werden kann. Die biegsame Welle ist in einer biegsamen Hülse geführt.

Bei einem mittels Druckluft angetriebenen Generator ist zum Abschalten des Generators in vorteilhafter Weise ein Schaltventil, vorzugsweise ein elektromagnetisch betätigbares Schaltventil vorgesehen, welches mittels von der Regelschaltung erzeugten Signalen schaltbar ist.

Das Schaltventil ist vorzugsweise im Bereich des freien Endes der Leitung zum Anströmen des mit der Antriebswelle des Generators verbundenen anzuströmenden Teiles vorgesehen. Es kann natürlich auch an jeder anderen Stelle dieser Leitung, z.B. an der Verbindungsstelle dieser zusätzlichen, als Anströmleitung dienenden Leitung mit einer anderen Druckmittelleitung, oder wenn die Anströmleitung direkt an den Druckluftvorratsbehälter angeschlossen ist, an dieser Anschlußstelle angeordnet sein. Das Schaltventil kann in vorteilhafter Weise auch in dem Gehäuse angeordnet werden, welches den Generator, den Akkumulator und die Steuerschaltung enthält. In diesem Fall muß die Anströmleitung wenigstens auf einem Teil ihrer Länge durch dieses Gehäuse bzw. in dieses Gehäuse geführt sein.

Wird der Generator mittels einer biegsamen Welle angetrieben, so kann diese über eine schaltbare Kupplung mit dem Generator oder mit dem Rad oder der Achse verbunden sein, wobei dann die schaltbare Kupplung von Signalen der elektrischen Steuerschaltung schaltbar ist.

Anhand der Zeichnung werden nachfolgend zwei Ausführungsbeispiele der Erfindung näher erläutert.

Es zeigen:

Fig.1   schematisch eine Einrichtung zur Versorgung eines elektrischen Verbrauchers eines Anhängerfahrzeugs mit elektrischer Energie;

Fig.2   eine Einrichtung gemäß Fig.1, wobei der Generator mittels Druckluft angetrieben wird;

Fig.3   einen Druckluftantrieb für den Generator;

Fig.4   den in einem Gehäuse angeordneten Generator mit dem zugeordneten Druckluftantrieb und

Fig.5   eine Einrichtung gemäß Fig.1, wobei der Generator über eine biegsame Welle mit einem an der Achse eines Fahrzeugs angeordneten Teil verbunden ist.

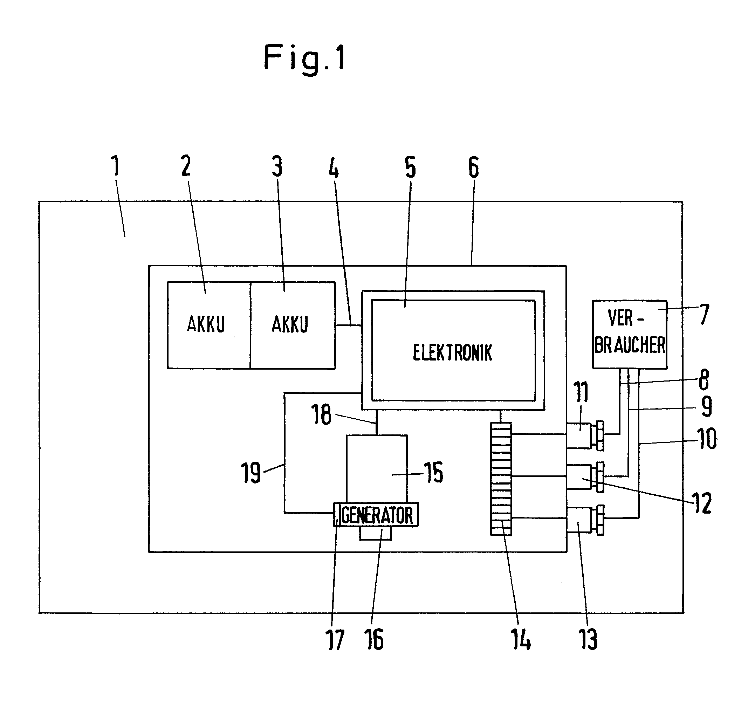

In Fig.1 ist ein Teil (1) eines Anhängerfahrzeugs dargestellt, an welchem ein Gehäuse (6) befestigt ist, welches eine Einrichtung zur Versorgung eines elektrischen Verbrauchers des Anhängerfahrzeugs mit elektrischer Energie aufweist.

In dem Gehäuse (6) sind ein Generator (15), eine elektrische Steuerschaltung (5), zwei Akkumulatoren (2, 3) sowie eine mit der elektrischen Steuerschaltung verbundene Schaltleiste (14) vorgesehen. Der Generator (15) weist eine Einrichtung (16) zum Antreiben des Generators (15) auf. Auf die Einrichtung (16) zum Antreiben des Generators (15) wird in den folgenden Ausführungsbeispielen noch eingegangen.

Ein Ausgang des Generators (15) ist über eine elektrische Leitung (18) mit der elektrischen Steuerschaltung verbunden. Desgleichen sind die beiden Akkumulatoren (2) und (3) über eine Leitung (4) mit der elektrischen Steuerschaltung verbunden. Die elektrische Steuerschaltung (5) steht über eine elektrische Leitung (19) mit einer am Generator (15) angeordneten Schalteinrichtung (17) in Verbindung, mittels welcher die Antriebsmittel für den Generator (15) schaltbar sind, und zwar in der Weise, daß der Antrieb für den Generator (15) eingeschaltet oder ausgeschaltet werden kann.

Die Schaltleiste (14) ist einerseits mit der elektrischen Steuerschaltung und andererseits über Anschlüsse (11, 12, 13) und mit diesen verbundene elektrische Leitungen (8, 9, 10) mit einem Verbraucher (7), wie z.B. einem Antiblockierregelsystem für die Bremsanlage des Anhängerfahrzeugs verbunden. Wird der Generator (15) angetrieben, so gelangt über die elektrische Leitung (18) elektrische Energie (Strom) zur elektrischen Steuerschaltung (5). Ein Schaltungsteil der elektrischen Steuerschaltung (5) prüft zunächst den Ladungszustand des bzw. der Akkumulatoren (2, 3). Weist bzw. weisen die Akkumulatoren (2, 3) einen vorbestimmten ausreichenden Ladungszustand auf, so wird von einem anderen Schaltungsteil der elektrischen Steuerschaltung über die elektrische Leitung (19) ein Schaltsignal auf die Schalteinrichtung (17) am Generator (15) gegeben. Die Schalteinrichtung (17) bewirkt, daß der Antrieb zum Generator (15) unterbrochen wird. Über die Schaltleiste (14) und die elektrischen Leitungen (8, 9, 10) wird der Verbraucher (7) von der elektrischen Steuerschaltung (5) mit elektrischer Energie (Strom) aus dem bzw. den Akkumulatoren (2, 3) versorgt.

Wird von der elektrischen Steuerschaltung (5) festgestellt, daß der bzw. die Akkumulatoren (2, 3) einen Mindestladungszustand unterschritten haben bzw. vollständig leer sind, so wird der Verbraucher (7) mittels der elektrische Steuerschaltung (5) direkt mit der vom Generator (15) erzeugten elektrischen Energie (Strom) versorgt. Die vom Verbraucher (7) nicht in Anspruch genommene überschüssige elektrische Energie des Generators (15) wird über die elektrische Steuerschaltung (5) auf den bzw. auf die Akkumulatoren (2, 3) gegeben, so daß diese wieder aufgeladen werden.

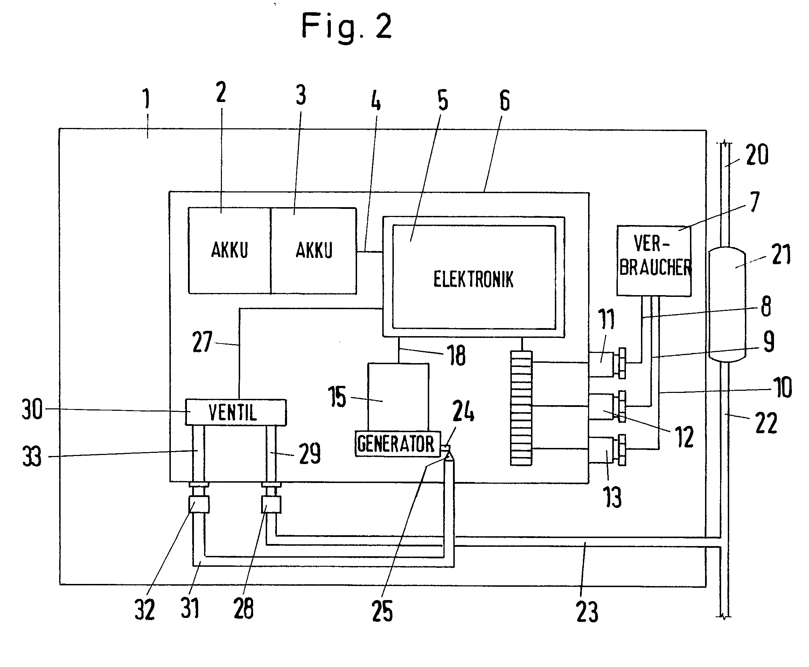

In der Fig.2 ist eine Einrichtung zur Versorgung eines elektrischen Verbrauchers eines Anhängerfahrzeugs mit elektrischer Energie dargestellt. Der besseren Übersicht halber sind die den in Fig.1 gezeigten Bauteilen gleichen Bauteile mit gleichen Bezugsziffern versehen.

An einem Anhängerfahrzeug, wie z.B. einem Güterwagen eines Eisenbahnzuges, ist ein Gehäuse (6) befestigt, welches einen Generator (15), eine elektrische Steuerschaltung (5), zwei Akkumulatoren (2) und (3), ein Teil (29, 33) einer als Anströmleitung dienenden Druckluftleitung (23, 31), ein als Elektromagnetventil ausgebildetes Schaltventil (30), welches in den Teil (29, 33) der Anströmleitung (23, 31, 29, 33) geschaltet ist, und eine mit der elektrischen Steuerschaltung (5) verbundene Schaltleiste (14) enthält.

Ein Ausgang des Generators (15) ist über eine elektrische Leitung (18) mit einem Eingang der elektrischen Steuerschaltung (5) verbunden. Die Akkumulatoren (2, 3) stehen ebenfalls über eine elektrische Leitung (4) mit einem weiteren Eingang der elektrischen Steuerschaltung (5) in Verbindung. Ein mit der Schaltleiste (14) verbundener erster Ausgang der elektrischen Steuerschaltung (5) ist über elektrische Leitungen (8, 9, 10) mit einem als Verbraucher (7) dienenden Antiblockierregelsystem für die Bremsanlage (Bremszylinder, Ventile, Druckmittelleitungen) des als Güterwagen ausgebildeten Anhängerfahrzeugs verbunden. Ein weiterer Ausgang der elektrischen Steuerschaltung (5) ist über eine elektrische Leitung (27) mit einem elektrischen Eingang eines als Elektromagnetventil ausgebildeten Schaltventils (30) verbunden. Das Schaltventil (30) ist in den Teil (29, 33) der als Anströmleitung dienenden zusätzlichen Druckmittelleitung (23, 29, 33, 31) geschaltet, welcher im Gehäuse (6) gelegen ist.

Das Schaltventil (30) muß an einer Stelle der zusätzlichen Druckmittelleitung (23, 29, 33, 31) angeordnet sein, die es ermöglicht, wenigstens den das freie Ende der zusätzlichen Druckmittelleitung (23, 29, 33, 31) aufweisenden Bereich gegen den Druckmittelvorratsbehälter (21) oder gegen eine andere Druckmitteilleitung (22), welche die zusätzliche Druckmittelleitung (23, 29, 33, 31) mit Druckluft speist, abzusperren.

Die als Anströmleitung dienende zusätzliche Druckmittelleitung (23, 29, 33, 31) ist geteilt ausgebildet. Das mit dem Eingang des Schaltventils (30) verbundene Teilstück (29) der Druckmittelleitung ist mit einer Wand des Gehäuses (6) verschraubt und über eine Anschlußmuffe (28) mit dem Teilstück (23) der Anströmleitung verbunden, welches an eine z.B. als Bremsleitung dienende Druckmittelleitung (22) der Bremsanlage des Anhängerfahrzeugs angeschlossen ist. Das andere Teilstück (33) der Anströmleitung (23, 29, 33, 31), welches mit dem Ausgang des Schaltventils (30) verbunden ist, ist ebenfalls mit der Wand des Gehäuses (6) verschraubt und steht über eine Anschlußmuffe (32) mit dem Teil (31) der Anströmleitung in Verbindung. Das freie Ende dieses Teiles (31) der Anströmleitung (23, 29, 33, 31) weist eine Düse (25) auf, die sich in das Gehäuse (6) hineinerstreckt und auf eine mit einer Antriebswelle des Generators verbundene Antriebseinrichtung (24) gerichtet ist. Die Antriebseinrichtung (24) ist nach Art einer Radialturbine ausgebildet. Sie kann selbstverständlich auch als Axialturbine ausgebildet sein.

Die an die Muffen (32) und (28) angeschlossenen Teile (31) und (23) der Anströmleitung (23, 29, 33, 31) sind bis auf den die Düse (35) aufweisenden Endbereich außerhalb des Gehäuses (6) gelegen.

Der Teil (22) der als Bremsleitung dienenden Druckmittelleitung ist an den Ausgang eines Druckmittelvorratsbehälters (21) angeschlossen. An den Eingang des Druckmittelvorratsbehälters (21) ist eine weitere Druckmittelleitung (20) angeschlossen, die mit dem von einem Kompressor erzeugten Druckmittel gespeist wird.

Das Schaltventil (30) kann selbstverständlich auch außerhalb des Gehäuses (6) gelegen sein. In diesem Fall ist die als Anströmleitung dienende zusätzliche Druckmittelleitung nicht mehrfach geteilt ausgebildet und über Muffen an das Gehäuse (6) angeschlossen.

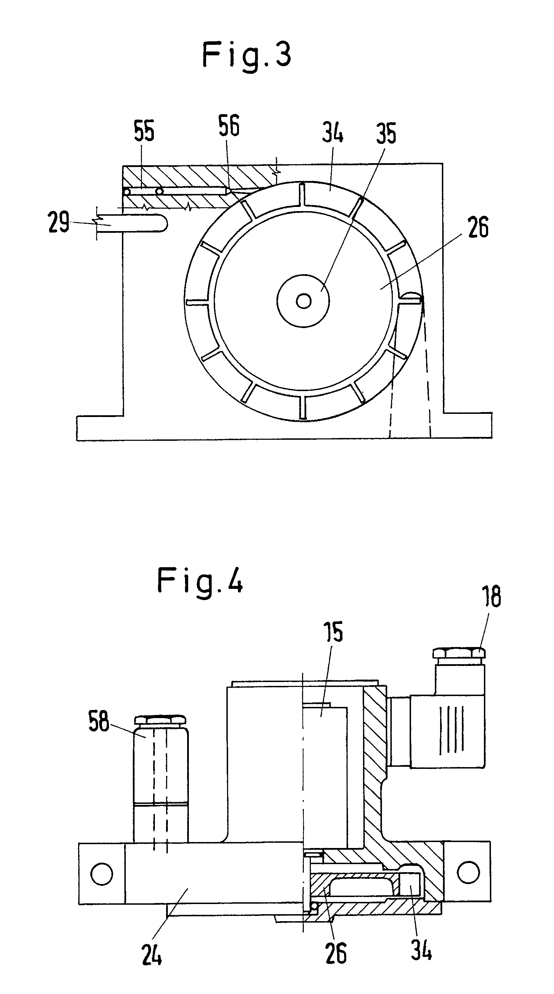

Die Antriebseinrichtung für den Generator (15) ist in den Figuren 3 und 4 näher dargestellt.

Der besseren Übersicht halber sind die den in der Fig.2 gezeigten Bauteilen gleichen Bauteile mit gleichen Bezugsziffern versehen.

In einem Gehäuse ist der Generator (15) angeordnet. Der Generator weist eine Antriebswelle (35) auf, mit welcher ein scheibenartiger kreisförmiger Körper (26) drehfest verbunden ist. Der kreisförmige Körper (26) weist Schaufeln (34) auf, die sich senkrecht oder geneigt zur Längsachse der Antriebswelle (35) des Generators vom kreisförmigen Körper (26) weg erstrecken. Quer zur Längsachse der Antriebswelle (35) des Generators ist im Gehäuse ein Kanal (53) angeordnet, der an seinem freien, den Schaufeln (34) des kreisförmigen Körpers zugewandten Ende als Düse (54) ausgebildet ist. Der Kanal (53) ist z.B. mit dem Teilstück (31) der Anströmleitung verbunden, wie in Fig.3 dargestellt.

In Fig.4 ist noch einmal der im vorgenannten Gehäuse angeordnete Generator (15) dargestellt, auf dessen Antriebswelle der scheibenförmige Körper (26) mit den Schaufeln (34) drehfest angeordnet ist. Am Generator bzw. an einem Teil des Generators ist ein Magnetventil (58) angeordnet, welches dem Magnetventil nach Fig.2 entspricht (Funktion). An den Eingang des Magnetventils (58) ist der Teil (29) der Anströmleitung angeschlossen. An dem den Generator aufnehmenden Gehäuse ist desweiteren eine Durchführung für die elektrische Leitung (18), welche den Generator mit der elektrischen Steuerschaltung verbindet, angeordnet.

Die Funktion der in Fig.2 dargestellten Einrichtung wird nachfolgend näher erläutert.

Bei Anschluß der im vorstehenden beschriebenen Einrichtung an das Druckluftnetz (z.B. Einschalten des Kompressors, der z.B. am Zugfahrzeug angeordnet sein kann oder Öffnen eines in der Druckluftleitung des Anhängerfahrzeugs angeordneten Ventils, setzt sich sofort der Generator (15) in Betrieb, d.h., die mit der Antriebswelle des Generators verbundene Antriebseinrichtung (24) wird von der Druckluft aus der Anströmleitung (23, 29, 33, 31) angetrieben und so die Antriebswelle des Generators in Drehbewegung versetzt. Der Generator (15) versorgt die elektrische Steuerschaltung (5) mit elektrischer Energie (Strom). Die elektrische Steuerschaltung (5) prüft zunächst den Ladungszustand der Akkumulatoren (2, 3). Sind die Akkumulatoren (2, 3) gefüllt, d.h., haben die Akkumulatoren (2, 3) einen vorbestimmten Ladungszustand, der zur Versorgung des Verbrauchers erforderlich ist, wird von der elektrischen Steuerschaltung (5) über die Leitung (27) ein Signal auf das Schaltventil (30) gegeben und das Schaltventil (30) wird in die Schaltstellung schließen gebracht.

Die Druckluftversorgung des die Düse (25) aufweisenden Teiles (31) der Anströmleitung (23, 29, 33, 31) ist unterbrochen, so daß der Generator nicht angetrieben wird. Der Verbraucher (7) wird über die elektrische Steuerschaltung (5) mit der Energie (Strom) der Akkumulatoren (2, 3) direkt versorgt.

Wird ein vorbestimmter Ladungszustand der Akkumulatoren (2, 3) unterschritten, so wird von der elektrischen Steuerschaltung (5) ein Signal über die Leitung (27) auf das Schaltventil (30) gegeben, welches ein Öffnen des Schaltventils (30) bewirkt. Durch die Anströmleitung (23, 29, 33, 31) strömt wieder Druckluft zur Antriebseinrichtung (24) des Generators (15). Der Generator (15) wird wieder angetrieben und lädt über die elektrische Steuerschaltung (5) einerseits die Akkumulatoren (2, 3) wieder auf und versorgt andererseits über die elektrische Steuerschaltung (5) sowie die Klemmleiste (14) und die Leitungen (8, 9, 10) den Verbraucher (7) mit elektrischer Energie (Strom).

Ist bei Inbetriebnahme der Anlage der Akkumulator oder sind bei Inbetriebnahme der Anlage die Akkumulatoren (2, 3) völlig entleert, reicht die von dem Generator (15) erzeugte elektrische Energie (Strom) aus, um einerseits den Verbraucher (7) mit elektrischer Energie (Strom) zu versorgen und andererseits die Akkumulatoren (2, 3) aufzuladen.

Die im vorstehenden beschriebene Einrichtung benötigt einerseits keine externe Versorgung mit elektrischer Energie und ist andererseits sofort nach Anschluß an eine Druckluftversorgung betriebsbereit. Zudem ist eine konstante Versorgung des Verbrauchers mit elektrischer Energie im Stillstand und bei unterschiedlicher Fahrgeschwindigkeit gewährleistet.

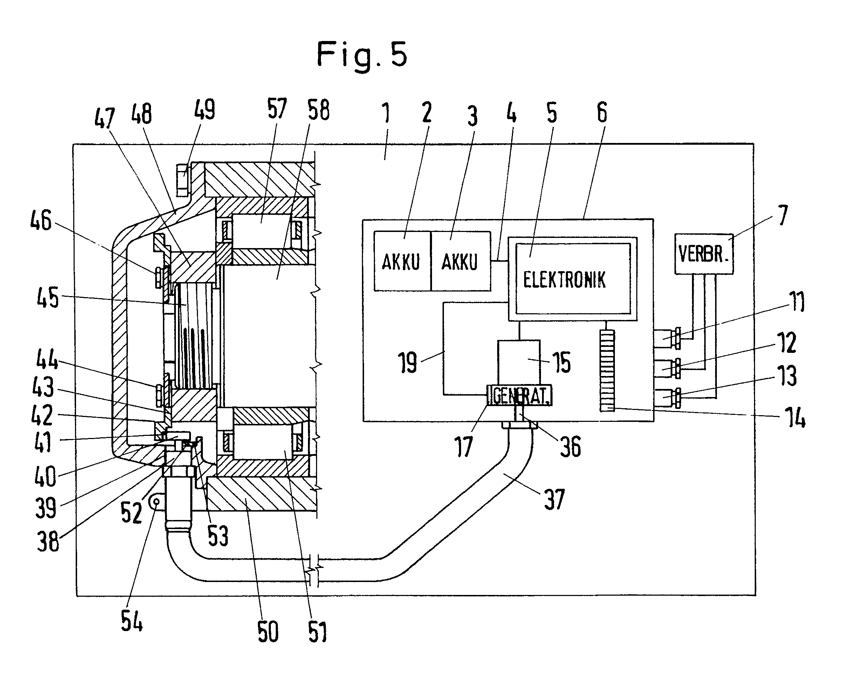

In Fig.5 ist eine Einrichtung gemäß Fig.1 dargestellt, wobei jedoch der Generator über eine biegsame (elastische) Welle von einem an der Fahrzeugachse angeordneten Teil angetrieben wird.

Der Einfachheit halber wird hier lediglich auf den Antrieb des Generators eingegangen.

Der besseren Übersicht halber sind die den in Fig.1 und 2 gezeigten Bauteilen gleichen Bauteile mit gleichen Bezugsziffern versehen.

Fig.5 zeigt eine in einem an seinen beiden gegenüberliegenden Seiten offenen Gehäuse unter Zwischenschaltung von Lagern (51, 57) drehbar gelagerte Achse (58). Die Achse (58) weist an ihren einander abgewandten Stirnseiten je einen mit Gewinde versehenen abgestuften Fortsatz (45) auf, wobei in der Abbildung lediglich einer dieser beiden Fortsätze (45) gezeigt ist. Auf jeden dieser Fortsätze (45) ist je eine Mutter (47) aufgeschraubt, welche die Achse (58) und die Lager (51, 57) in axialer Richtung sichert. An der freien Stirnseite einer dieser Muttern (47) ist ein abgekröpft ausgebildeter ringförmiger Körper (42, 43) mittels Schrauben (44) und (46) befestigt. Das freie Ende der Achse (58) mit Mutter (47) und ringförmigem Körper (42, 43) ist von einem topfförmig ausgebildeten Deckel (48) abgedeckt, der mittels Schrauben (49) am Gehäuse (50) befestigt ist.

Der Deckel (48) weist einen Durchlaß (39) auf, der sich in radialer Richtung der Achse in Richtung auf die Mutter zu erstreckt. In dem Durchlaß (39) des Deckels (48) ist ein abgestuftes Teil (38) der biegsamen (elastischen) Hülse (37) einer biegsamen Welle (37, 36) gelagert. Das sich im Bereich des Deckels (48) befindliche Endteil der Hülse (37) der biegsamen Welle (36) ist mittels einer Klemmeinrichtung (54) am Gehäuse (50) fixiert. Die biegsame Welle (36) weist an ihrem innerhalb des Deckels gelegenen Endbereich ein Reibrad (40) auf, welches mit dem abgekröpften Teil (42) des ringförmigen Körpers (42, 43) in Wirkverbindung steht. Das andere Ende der die biegsame Welle (36) aufnehmenden biegsamen Hülse (37) ist an einer Wand des die Akkumulatoren (2, 3), die elektrische Steuerschaltung (5) und den Generator (15) aufnehmenden Gehäuses (6) befestigt. Das dem Generator (15) zugewandte Ende der biegsamen Welle (36) ist mit der Antriebswelle des Generators direkt oder über eine schaltbare Kupplung verbunden.

Ist am Generator eine schaltbare Kupplung zwischen der Antriebswelle des Generators und der biegsamen Welle (36) vorgesehen, so ist diese Kupplung derart ausgebildet, daß sie von elektrischen Signalen der elektrischen Steuerschaltung (5) in der Weise schaltbar ist, daß der Generator (15) angetrieben oder stillgesetzt werden kann.

Die biegsame Welle wird von einem federnden Element (52), welches sich einerseits an einem Teil (53) des Deckels abstützt und andererseits die biegsame Welle (36) oder ein mit der biegsamen Welle (36) in Verbindung stehendes Teil beaufschlagt in Richtung auf den ringförmigen Körper (42, 43) zu belastet.

Anstelle des Reibrades (40) kann an der biegsamen Welle (36) auch ein Zahnrad vorgesehen werden, welches mit einer an dem abgekröpften Teil (42) des ringförmigen Körpers (42, 43) angeordneten Verzahnung in Eingriff steht.

Selbstverständlich kann der elektrische Ausgang des Generators (15) mit der elektrischen Steuerschaltung (5) über ein zusätzliches Schaltungsteil derart verbunden sein, daß bei gefülltem Akkumulator bzw. bei gefüllten Akkumulatoren (2, 3) die Versorgung der Akkumulatoren (2, 3) mit der elektrischen Energie des Generators (15) unterbrochen wird.

Es ist natürlich auch möglich, die biegsame Welle (36) nicht mit der Achse (58) bzw. mit einem mit der Achse (58) verbundenen Teil, sondern mit dem Rad oder mit einem mit dem Rad verbundenen Teil in Wirkverbindung zu bringen.

Es ist selbstverständlich auch möglich, auf die Akkumulatoren zu verzichten und den Verbraucher (7) direkt über die elektrische Steuer- oder Regelschaltung mit der vom Generator (15) erzeugten elektrischen Energie zu versorgen.

Die beschriebene und beanspruchte Einrichtung kann sowohl in bzw. an Anhängerfahrzeugen, die keinen eigenen Antrieb besitzen als auch in bzw. an Anhängerfahrzeugen mit eigenem Antrieb, der zeitweise außer Betrieb ist (gezogener Triebwagen) eingesetzt werden.
Das Schaltventil (30) kann auch als ein mechanisch betätigbares Ventil ausgebildet sein.

Es ist selbstverständlich auch möglich, eine schaltbare Kupplung zwischen der Achse oder dem Rad bzw. zwischen dem mit der Achse oder dem Rad verbundenen Teil des Anhängerfahrzeugs und der biegsamen Welle vorzusehen.

**Patentansprüche**

1. Einrichtung zur elektrischen Versorgung eines Verbrauchers eines Anhängerfahrzeugs, dadurch gekennzeichnet, daß in oder an dem Anhängerfahrzeug (1) ein Generator (15) zum Erzeugen von elektrischer Energie angeordnet ist.

2. Einrichtung nach Anspruch 1, dadurch gekennzeichnet, daß der Generator (15) mittels einer elektrischen Steuerschaltung (5) mit einem Akkumulator (2) und/oder mit dem Verbraucher (7) verbunden bzw. verbindbar ist.

3. Einrichtung nach Anspruch 2, dadurch gekennzeichnet, daß der Verbraucher mittels der elektrischen Steuerschaltung (5) mit dem Akkumulator (2, 3) verbunden bzw. verbindbar ist.

4. Einrichtung nach wenigstens einem der vorhergehenden Ansprüchen 2 und 3, gekennzeichnet durch die folgenden Merkmale:
   a) die elektrische Steuerschaltung (5) weist eine Prüfeinrichtung zum Prüfen des Ladungszustandes des Akkumulators (2, 3) auf;
   b) die elektrische Steuerschaltung (5) weist ein Schaltungsteil auf, welches die Versorgung des Akkumulators (2, 3) mit der elektrischen Energie des Generators (15) unterbricht, wenn der Akkumulator (2, 3) einen vorgegebenen Ladungszustand erreicht hat;
   c) die elektrische Steuerschaltung (5) weist ein Schaltungsteil auf, welches bewirkt, daß der Verbraucher (7) während des Ladevorganges des Akkumulators (2, 3) direkt mit der vom Generator (15) erzeugten elektrischen Energie versorgt wird.

5. Einrichtung nach wenigstens einem der vorhergehenden Ansprüche, dadurch gekennzeichnet, daß als Mittel zum Antreiben des Generators (15) ein mit einer Antriebswelle des Generators (15) in Wirkverbindung stehendes Teil (24) vorgesehen ist, welches vom Druckmittel aus einer Druckmittelquelle (21) anströmbar ist, wobei das mit der Antriebswelle des Generators (15) in Wirkverbindung stehende Teil (24) so ausgebildet ist, daß es eine Rotationsbewegung der Antriebswelle des Generators (15) bewirkt.

6. Einrichtung nach Anspruch 5, dadurch gekennzeichnet, daß das mit der Antriebswelle des Generators in Wirkverbindung stehende Teil (24) in der Art einer Radialturbine ausgebildet ist.

7. Einrichtung nach Anspruch 5, dadurch gekennzeichnet, daß das mit der Antriebswelle des Generators (15) in Wirkverbindung stehende Teil (24) als ein kreisrunder scheibenförmiger Körper (26) ausgebildet ist, welcher nach Art einer Schaufel ausgebildete flügelartige Vorsprünge (34) aufweist, die senkrecht oder geneigt zur ebenen Fläche des scheibenförmigen Körpers (26) angeordnet sind.

8. Einrichtung nach wenigstens einem der vorhergehenden Ansprüche 5 bis 7, dadurch gekennzeichnet, daß als Druckmittel zum Anströmen des mit der Antriebswelle des Generators (15) in Wirkverbindung stehenden Teiles (24) Druckluft aus einem im oder am Anhängerfahrzeug (1) angeordneten Druckluftvorratsbehälter (21) dient.

9. Einrichtung nach Anspruch 8, dadurch gekennzeichnet, daß der Druckluftvorratsbehälter (21) Bestandteil einer im oder am Anhängerfahrzeug (1) angeordneten Bremsanlage ist, welche Bremszylinder und diese mit dem Druckmittelvorratsbehälter (21) verbindende Druckmittelleitungen (20, 22) aufweist.

10. Einrichtung nach wenigstens einem der vorhergehenden Ansprüche 8 und 9, dadurch gekennzeichnet, daß an den Druckmittelvorratsbehälter (21) oder an eine mit dem Druckmittelvorratsbehälter (21) verbundene Druckmittelleitung (22) eine zusätzliche Druckmittelleitung (23, 33, 31) angeschlossen ist, deren freies Ende (25) zum Anströmbereich des mit der Antriebswelle des Generators (15) verbundenen Teiles (24) hingeführt ist.

11. Einrichtung nach Anspruch 10, dadurch gekennzeichnet, daß ein Schaltventil (30) vorgesehen ist, mittels welchem wenigstens der das freie Ende aufweisende Bereich (29, 33, 31) der zusätzlichen Druckmittelleitung (23, 29, 33, 31) gegen den Druckmittelvorratsbehälter (21) oder gegen eine andere Druckmittelleitung (22), welche die zusätzliche Druckmittelleitung (23, 29, 33, 31) mit Druckmittel speist, absperrbar ist.

12. Einrichtung nach Anspruch 11, dadurch gekennzeichnet, daß das Schaltventil (30) in die zusätzliche Druckmittelleitung (23, 29, 33, 31) geschaltet ist.

13. Einrichtung nach wenigstens einem der vorhergehenden Ansprüche 11 und 12, dadurch gekennzeichnet, daß das Schaltventil (30) als Elektro-Magnetventil ausgebildet ist.

14. Einrichtung nach wenigstens einem der vorhergehenden Ansprüche 11 und 12, dadurch gekennzeichnet, daß das Schaltventil (30) als ein mechanisch betätigbares Ventil ausgebildet ist.

15. Einrichtung nach wenigstens einem der vorhergehenden Ansprüche, dadurch gekennzeichnet, daß das Schaltventil (30) mit der Steuerschaltung (5) elektrisch verbunden ist, wobei das Schaltventil (30) in die Schließstellung gebracht wird, wenn von der Steuerschaltung (5) ein das Erreichen eines vorbestimmbaren maximalen Ladungszustand des Akkumulators (2, 3) anzeigendes Signal auf das Schaltventil (30) gegeben wird und das Schaltventil (30) in die Offenstellung gebracht wird, wenn von der Steuerschaltung (5) ein das Unterschreiten eines vorbestimmbaren Ladungszustandes des Akkumulators (2, 3) anzeigendes Signal auf das Schaltventil (30) gegeben wird.

16. Einrichtung nach wenigstens einem der vorhergehenden Ansprüchen 2 bis 15, dadurch gekennzeichnet, daß der Generator (15), der Akkumulator (2, 3) und die Steueischaltung (5) in einem gemeinsamen Gehäuse (6) angeordnet sind.

17. Einrichtung nach wenigstens einem der vorhergehenden Ansprüche 1 bis 4 und 16, dadurch gekennzeichnet, daß die Mittel zum Antreiben des Generators (15) aus einer biegsamen (elastischen) Welle (36, 37) bestehen, die einerseits mit einer Antriebswelle des Generators (15) und andererseits mit einem Rad bzw. mit einer Achse des Anhängerfahrzeugs oder mit einem mit dem Rad bzw. mit der Achse drehfest verbundenen Teil in Wirkverbindung steht bzw. in Wirkverbindung bringbar ist, derart, daß die Antriebswelle des Generators (15) vom Rad bzw. von der Achse oder von dem mit dem Rad bzw. von dem mit der Achse drehfest verbundenen Teil antreibbar ist.

18. Einrichtung nach Anspruch 17, dadurch gekennzeichnet, daß die biegsame Welle (37 38) auf ihrer dem Rad bzw. der Achse oder dem mit dem Rad bzw. der Achse drehfest verbundenen Teil zugewandten Seite ein Zahnrad (40, 52) aufweist, welches mit einer an dem mit dem Rad bzw. der Achse drehfest verbundenen Teil vorgesehenen Verzahnung oder mit einer am Rad bzw. an der Achse vorgesehenen Verzahnung in Eingriff steht.

19. Einrichtung nach wenigstens einem der vorhergehenden Ansprüche 17 und 18, dadurch gekennzeichnet, daß die biegsame Welle (37, 38) auf ihrer dem Rad bzw. der Achse oder dem mit dem Rad bzw. der Achse drehfest verbundenen Teil zugewadten Seite ein Reibrad aufweist, welches mit dem mit dem Rad bzw. mit der Achse verbundenen Teil bzw. mit dem Rad oder mit der Achse in Wirkverbindung steht.

20. Einrichtung nach wenigstens einem der vorhergehenden Ansprüche 17 bis 19, dadurch gekennzeichnet, daß zwischen der biegsamen Welle (36, 37) und dem Generator (15) eine schaltbare Kupplung angeordnet ist.

# Fig.1

# Fig. 2

EP 0 449 397 A2

# Fig.3

# Fig.4

Fig.5